# EUROPEAN PATENT SPECIFICATION

(11) **EP 4 566 833 B1**
(45) Date of publication and mention of the grant of the patent: **19.08.2026**
(21) Application number: 23383251.8
(22) Date of filing: 04.12.2023
(51) Int. Cl.: B60B 1/04, B60B 1/00, B60B 21/06

(54) **ARTICULATED NIPPLE FOR CONNECTING A BICYCLE WHEEL SPOKE**
GELENKNIPPEL ZUR VERBINDUNG EINER FAHRRADRADSPEICHE
ECROU ARTICULÉ POUR LA LIAISON D'UN RAYON DE ROUE DE BICYCLETTE

(43) Date of publication of application: 11.06.2025
(73) Proprietor: ORBEA, S. COOP., 48269 Mallabia (BIZKAIA) (ES)
(72) Inventor: CAMBRONERO GONZÁLEZ, Juan Carlos, 48269 Mallabia (BIZKAIA) (ES)
(74) Representative: Cueto, Sénida

(56) References cited:
- EP-B1- 1 167 078
- US-A1- 2009 311 039
- US-A1- 2021 039 429
- US-B2- 11 148 466

## Description

### Object of the invention

The present invention belongs to the field of bicycles, and more particularly to the design and production of bicycle wheels.

A first aspect of the present invention is directed to an articulated nipple for connecting a bicycle wheel spoke.

A second aspect of the present invention is directed to a method to produce an articulated nipple of the type disclosed above.

### State of the art

Bicycle wheel spokes mainly consist of thin rods connected between the hub and the rim. Specifically, a radially inner end of the spoke is fixed to the hub and a radially outer end of the spoke is fixed to the rim. The connection of the radially outer end of the spoke with the rim is implemented usually by means of a number of elements known as nipples. Such nipples are known for example from document US 2021/039429 A1.

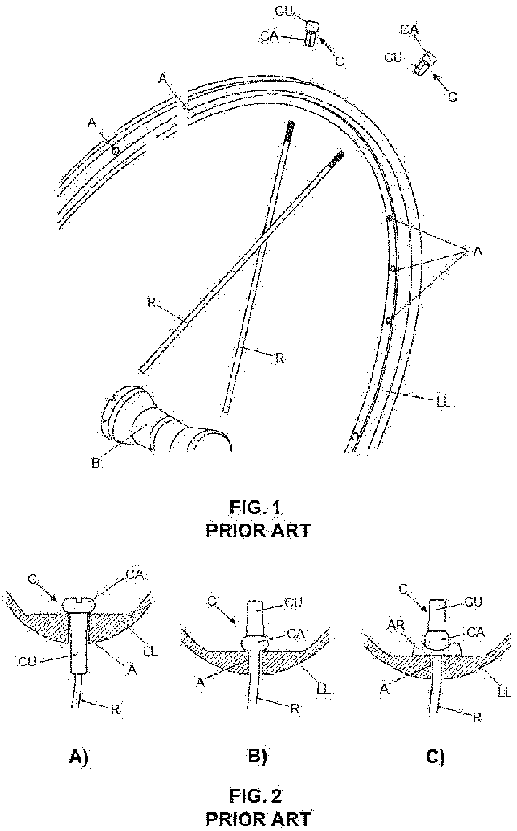

As shown in Fig. 1, a nipple (C) mainly consists of a body (CU) having a hole with an internal thread and a head (CA) whose diameter is larger than the diameter of a hole (A) in the rim (LL) through which the spoke (R) is introduced for connection with the thread of the nipple (C). The nipple (C) is placed at the inner side of the rim (LL) resting against the edges of the hole (A), such that the orifice of the nipple (C) is aligned with the hole (A) of the rim (LL). The outer end of the spoke (R) passes through said hole (A) in the rim (LL) and is threaded into the orifice of the nipple (C). By modifying the distance that the end of the spoke (R) is threaded into the orifice of the nipple (C), the tension of the spoke (R) is adjusted.

Starting from the above generic configuration, generally two types of nipples (C) are known, usually referred to as inner or outer nipples depending on whether the body (CU) is situated inside or outside the rim (LL).

An outer nipple (C), as shown schematically in Fig. 2A, is configured for the body (CU) to pass through the hole (A) of the rim (LL), such that the head (CA) rests against the edges of the hole (A) within the rim (LL). That is, the maximum diameter of the body (CU) is lower than the diameter of the hole (A) of the rim (LL), while the head (CA) has a larger diameter than the diameter of said hole (A) in the rim (LL). The body (CU) of the nipple (C), therefore, passes through the hole (A) and protrudes towards the outside of the rim (LL). The body (CU) usually has at least a length of polygonal cross section, e.g. squared, thus enabling the user to grasp it either manually or by means of a tool to rotate it and thereby threading the spoke (R) into the orifice of the nipple (C). In this context, note that normally it is not possible to thread both elements by rotating the spoke (R), as the manner in which the radially inner end of the spoke (R) is connected to the hub (B) prevents said rotation.

An inner nipple (C), as shown schematically in Fig. 2B, is designed for the body to be placed completely inside of the rim (LL). That is, in that case the head (CA) rests on the edges of the hole (A) at the inner side of the rim (LL) and the body (CU) protrudes towards the inside of said rim (LL) at the side of said head (CA) opposite to that where the hole (A) is provided. Also in this case, the body (CU) has a length having a polygonal cross-section to enable the spoke (R) to be threaded, although in this case it is necessary to access the interior of the rim (LL) to carry out said threading. Naturally, the rim (LL) must be double walled to prevent the body (CU) of the nipple (C) from damaging the inner tube (not shown in the figures). On the other hand, note that in this configuration only the spoke (R) passes through the hole (A) in the rim (LL).

Using inner nipples (C) is advantageous from an aerodynamic point of view, although said advantage is achieved at the expense of a larger complexity when installing the spokes (R) because access to the interior of the rim (LL) is absolutely necessary. On the other hand, outer nipples (C) are easier to install, since they can be threaded by grasping the polygonal length of the body (CU) that protrudes outwards from the rim (LL).

On the other hand, the diameter of the holes (A) of the rim (LL) is larger when outer nipples (C) are used in comparison with the use of inner nipples (C). Indeed, when outer nipples (C) are used, the hole (A) must allow passage of the body (CU) of the nipple (C) where the spoke (R) is threaded. On the contrary, when inner nipples (C) are used, only the spoke (R) passes through hole (A). For that reason, there exist specific rims (LL) for each nipple (C) type. Rims (LL) used with inner nipples (C) have holes (A) whose diameter can be of about 2,3 mm, while rims (LL) used with outer nipples (C) have holes (A) whose diameter is approximately 4,3 mm or more.

In this context, the use of washers (AR) to reduce the tensions at the area where the head (CA) rests on the rim (LL) is also known. As shown in Fig. 2C, the provision of a washer (AR) between the head (CA) of the nipple (C) and the rim (LL) provides a curved area, normally spherical or approximately spherical, where said head (CA) abuts. This configuration allows for the spokes (R) to enter the the rim (LL) with a small angulation without creating tensioned areas. While Fig. 2C shows a washer (AR) combined with an inner nipple (C), use of washers (AR) is compatible with both inner and outer nipples (C).

The use of washers (AR) solves the problem regarding the tensions produced at the abutment area of the head (CA) of the nipple (C) on the rim (LL). However, there is a drawback in that they only have one single correct position, specifically the position where the curved area is oriented towards the inside of the rim (LL), this fact potentially causing non-expert users to make mistakes. Further, as these parts have a very small size, there is also the risk that the washer (AR) falls and is lost during the installation process.

In conclusion, there exist in this field a need for spoke fixation systems that solve these and other drawbacks.

### Brief disclosure of the invention

The inventors of the present invention have solved the aforementioned drawbacks by means of a new nipple that is formed by a body and a washer connected in an articulated manner. This configuration allows for the nipple with the washer to firmly rest against the inner side of the rim, where the body can rotate in a similar manner as a ball joint with respect to said washer to adopt an optimal orientation with respect to the direction of the spoke it is connected to.

### First aspect: articulated nipple

A first aspect of the present invention is therefore directed to an articulated nipple for the fixation of a bicycle spoke. The nipple comprises an elongated body and a washer. The body comprises a threaded longitudinal orifice configured for the threaded connection of an end of a bicycle spoke, in a similar manner as the conventional nipples. On the other hand, also in a similar manner as the conventional washers, the washer of the articulated nipple of the invention is configured to abut against a rim surface.

At this point, only elements known in conventional prior art nipples have been disclosed. The nipple of the invention, however, differs from the conventional nipples in that the body comprises a radial protrusion radially protruding therefrom and the washer comprises a radially inner face making up a radial cavity. Thus, the protrusion is housed into said radial cavity to conform an articulated connection between washer and body. The articulated connection allows for the body to be rotated an angle with respect to the washer around an axis in perpendicular to the longitudinal axis of the washer. The body can therefore rotate with respect to the washer to be oriented in the direction of the spoke connected thereto, the tensions appearing when using prior art nipples being thereby reduced. According to preferred embodiments of the invention, the rotation angle of the body with respect to the washer can be of up to 15°.

The protrusion normally has the shape of a revolution body emerging radially from de body, which is normally cylindrical or, at least, partially cylindrical. The protrusion may have smooth surfaces lacking corners, both at the area where it emerges from the body and at the maximum diameter area. It could be said that the protrusion has an essentially flattened toroidal shape.

In principle, the protrusion may be provided anywhere along the length of the body. However, in preferred embodiments of the invention, the protrusion is adjacent the second end of the body or, alternatively, the protrusion is provided at an intermediate portion of the body. In the first case, the articulated nipple would be an inner nipple, since, once the nipple is mounted, the body would be completely housed within the rim. In the second case, the articulated nipple would be an outer nipple, since a part of the body portion located between the protrusion and the second end would protrude through the rim.

On the other hand, the radially inner face of the washer according to the invention is completely different in comparison with a conventional washer. In contrast with a conventional washer, having a cylindrical radially inner face, the washer of the present invention is recessed in a radially outward direction to conform a cavity whose size and shape are adapted to receive the protrusion. The cavity could also be defined approximately as a flattened toroid.

The nipple of the invention thereby comprises two parts, body and washer, connected one to the other in an articulated manner. The connection is implemented by housing the protrusion of the body inside the cavity of the washer, where both elements are configured to conform a ball joint type articulated connection. As to the materials, body and washer could be made in one or several of the following materials: aluminium, brass, steel, magnesium, titanium, bronze and synthetic fibers.

In principle, the body and the cavity could be shaped in any manner provided they both make up an articulated connection. For example, in a particularly preferred embodiment of the invention, the radially inner face of the washer comprises a first length having a diameter that increases towards a first end of the nipple, followed by a second length having a diameter that decreases towards said first end. On the other hand, the protrusion comprises a first face oriented towards a second end of the nipple opposite the first end, the first face having a curved face that is complementary with the curved shape of the first length of the radially inner face of the washer. Preferably, the first length of the radially inner face of the washer and the first face of the protrusion that, in use, abuts against it, have both an spherical shape.

Thereby, the protrusion is housed within the radial cavity formed by the radially inner face of the washer between the first length and the second length such as, in use, the first face of the protrusion abuts in a rotatable manner against the first length of the radially inner face of the washer in a ball-joint like manner to conform an articulated connection. The body can therefore rotate with respect to the washer around an axis in perpendicular to the axis of the washer.

In another preferred embodiment of the invention, the diameter of the radially inner ends of respectively the first and second lengths of the radially inner face of the washer is smaller than the maximum diameter of the protrusion of the body. Thereby, the protrusion is trapped inside the radial cavity formed by the radially inner face of the washer.

In still another preferred embodiment of the invention, the radially inner face of the washer further comprises, subsequently from the second length, a third length having a diameter that decreases towards the first end. Thus, the combination formed by the second length and the third length forms a flange configured to open radially in an elastic manner during a step of introducing the protrusion of the body inside the radial cavity of the washer during while assembling the nipple when the first face of the protrusion pushes towards the second end against the third length of the washer. For example, the third length may have the shape of a conical ramp opening towards the first end.

The introduction of the protrusion of the body in the radial cavity formed by the radially inner face of the washer can be carried out in any suitable manner, for example, by applying pressure or by riveting.

### Second aspect: method for producing the articulate nipple

A second aspect of the present invention is directed to a method for producing an articulated nipple such as the one disclosed in the above passages. Said method comprises a step of pressing or riveting for introducing the protrusion of the body into the radial cavity formed by the radially inner face of the washer.

### Brief description of the drawings

The details of the invention are shown in the accompanying figures, which are not intended to limit the scope of the invention:
Fig. 1 shows a perspective view of the position of a number of conventional nipples in a bicycle wheel.
Figs. 2A-C respectively show a conventional outer nipple, a conventional inner nipple, and a conventional inner nipple installed with a washer.
Fig. 3 shows a perspective view of an exemplary outer articulated nipple according to the present invention in a disassembled position.
Figs. 4A-4C schematically show a process for assembling the exemplary outer articulated nipple according to the present invention.
Fig. 5 shows a detailed section view of a washer according to the present invention.
Fig. 6 shows a section view of an outer articulated nipple according to the present invention installed in a wheel rim.
Fig. 7 shows a perspective view of an exemplary inner articulated nipple according to the present invention.
Figs. 8A-8B show schematic sections illustrating a process for assembling the exemplary inner articulated nipple according to the present invention.
Fig. 9 shows a section view of an inner articulated nipple according to the present invention installed in a wheel rim.

### Detailed description of the invention

Next, the invention is disclosed with reference to the attached drawings.

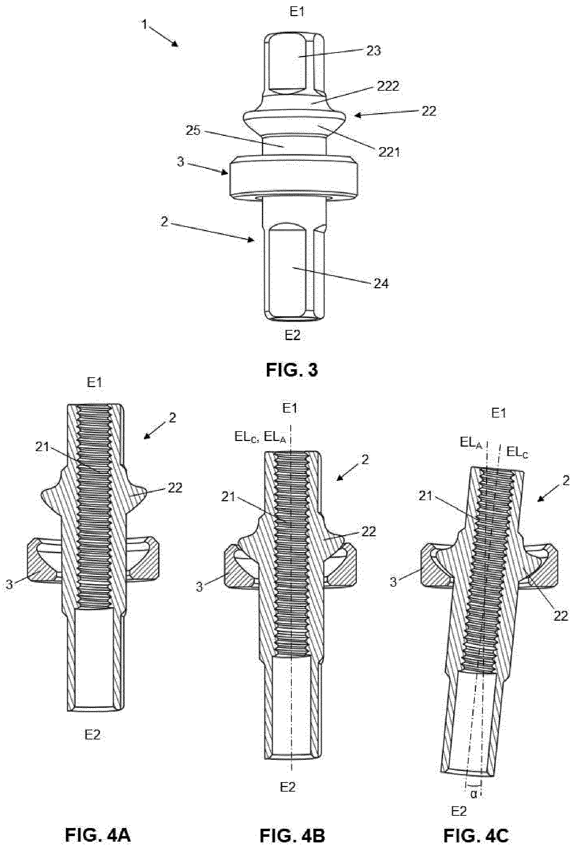

Figs. 3 and 4A-4C show an exemplary outer articulated nipple (1) according to the present invention. As illustrated, this articulated nipple (1) comprises two parts connected one to the other: a body (2) and a washer (3).

With the purpose of improving clarity, in this documents the terms *"first end (E1)"* and *"second end (E2)"* are employed to make reference to the ends of the nipple (1) as a whole, the body (2) or the washer (3). The second end (E2) of the nipple (1), the body (2) or the washer (3) is that which, once installed in a rim (LL), is closest to the wheel hub (B), while the first end (E1) of the nipple (1), the body (2) or the washer (3) is that which, once installed in the rim (LL), is farthest from the wheel hub (B). In the positions shown in the figures, the first end (E1) is located at an upper position and the second end (E2) is located at a lower position. Therefore, the terms *"upper"* and *"lower"* must be interpreted in this manner.

The body (2) has an essentially cylindrical shape although, as conventionally known, both ends have lengths (23, 24) having a polygonal cross-section, square in this particular case, for grabbing them using a wrench during the installation process. Specifically, the body (2) comprises a first length (23) with a square cross-section adjacent the first end (E1) of the nipple (1) and a second length (24) having a square cross-section adjacent the second end (E2) of the nipple (1). The intermediate length (25) between both square cross-section lengths (23, 24) is cylindrical. Naturally, this configuration is only an example, and nipples (1) where the square cross-section lengths (23, 24) do not extend to the respective ends (E1, E2), or else having a single square cross-section length (23, 24), are possible.

The body (2) has an inner cylindrical through orifice having a thread (21). This thread (21) is configured to threadedly receive the end of a bicycle spoke (R). As shown, the thread (21) needs not encompass the whole length of the body (2).

The body (2) further comprises a protrusion (22) that, in this particular example, is situated between the intermediate length (25) and the first square cross-section length (23). The protrusion (22) is a revolution body having radial symmetry, formed by a first face (221) having a spherical section oriented towards the second end (E2) of the body (2) and a second face (222) oriented towards the first end (E1). The first face (221) curves outwards, that is, in a direction opposite the protrusion (22) itself, generating a bulge. On the other hand, the second face (222) curves inwards, that is, towards the interior of the protrusion (22) itself, creating a recessed area. The connection edge between the first face (221) and the second edge (222), that constitutes the point of maximum diameter of the body (2), is rounded.

Aa shown, the protrusion (22) is provided at an intermediate portion of the body (2), that is, separated both from the first end (E1) and the second end (E2). This configuration corresponds to an outer articulated nipple (1) since, when the nipple (1) is installed in a wheel rim (LL), all of the intermediate length (25) and the second length (24) will pass through the rim (LL) and will protrude, at least partially, therethrough.

In this example, the body is made of aluminium, although other materials such as brass, steel, magnesium, titanium, bronze or synthetic fibres are possible.

The washer (3), on the other hand, has essentially flat upper (oriented towards the first end (E1)) and lower (oriented towards the second end (E2)) faces. Specifically, the lower face has a shape configured to abut against the inner face of the rim (LL) of a bicycle wheel. The radially outer face of the washer (3) is essentially cylindrical. However, unlike the conventional washers, the radially inner face (31) of the washer (3) is configured to conform a radial cavity. This radial cavity, as the washer (3) as a whole, is a revolution body with radial symmetry. The shape of the radially inner face (31) of the washer (3) is configured to fit with the shape of the protrusion (22). Thus, when the articulated nipple (1) of the invention is mounted, the protrusion (22) is housed inside the cavity of the radially inner face (31) of the washer (3), such that the body (2) can rotate with respect to the washer (3).

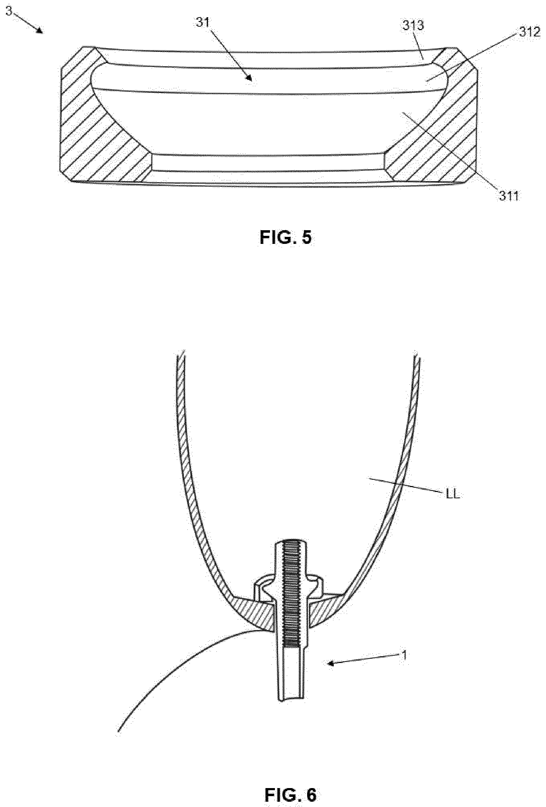

Fig. 5 shows in greater detail the shape of an exemplary washer (3) according to the present invention. As shown, the radially inner face (31) of the washer (3) has a first length (311) whose diameter increases from a minimum value to a maximum value towards the first end (E1); then there is a second length (312) whose diameter decreases from said maximum value to an intermediate value larger than the minimum value; and then there is a third length (313) whose diameter increases again to a second maximum value that, in this example, is similar to the maximum value disclosed above. In this example, the shape of the first length (311) is spherical, the shape of the second length (312) is curved, for example, toroid portion shaped, and the shape of the third length (313) is conical.

As shown, the second length (312) is joined to the third length (313) by means of a sharp edge, such that they both conform in combination a thin lip or flange radially oriented towards the inside of the washer (3). As disclosed below, this flange has a certain elasticity in the radial direction, such that it can be elastically opened to introduce the protrusion (22) inside the cavity formed by the combination of the first length (311) and the second length (312) of the washer (3).

Indeed, Figs. 4A-4C show how the body (2) and the washer (3) are coupled one to the other. As shown, the body (2) is introduced into the washer (3) until the rounded edge where the first face (221) and the second face (222) of the protrusion (2) abuts against the third length (313) of the washer (3). In that position, a downwardly oriented force towards the second end (E2) of the nipple (1) is applied to the body (2). Thanks to the conical shape of the third length (313) of the washer (3), the applied force tends to displace radially outwards the flange formed by the combined second and third lengths (312, 313), deforming it elastically, the protrusion (22) thereby passing towards the interior of the cavity of the radially inner face (31) of the washer (3). Once past the protrusion (22), the flange formed by the combined second and third lengths (312, 313) returns to its original shape, the protrusion (22) thereby being trapped inside the cavity formed by the combined first and second lengths (311, 312) of the washer (3).

In this position, the first face (221) of the protrusion (22) contacts the first length (311) of the radially inner face (31) of the washer (3). As mentioned above, both surfaces (221, 311) are complementary, specifically in this example they are both spherical portions, such that one can slide against the other. This configuration allows, as shown in Fig. 4C, for the body (2) to rotate with respect to the washer (3). This rotation may be around the edge (EL_{C}) of the body (2), or else it can be a rotation of the body (2) with respect to the washer (3). In this second case, the rotation of the body (2) would take place around an axis that is perpendicular to the axis of the washer (EL_{A}), thereby allowing for the two elements to adopt an unaligned configuration. The rotation angle in this case could be of up to 15°, facilitating the body (2) to be oriented in the same direction as the spoke (R) it is connected to when said spoke (R) separates from the radial direction of the wheel.

Fig. 6 shows a cross-section view of a rim (LL) having an outer articulated nipple (1), such as the one disclosed above, installed in its natural position. As shown, the lower face of the washer (3) is firmly resting on the upper face (that is, inner) of the rim (LL). In view of the position of the protrusion (22) in the body (2), the body (2) has a length that protrudes downwardly through the rim (LL). Further, the body (2) can rotate with respect to the washer (3) for aligning with the direction or the spoke (R) it is going to be connected to.

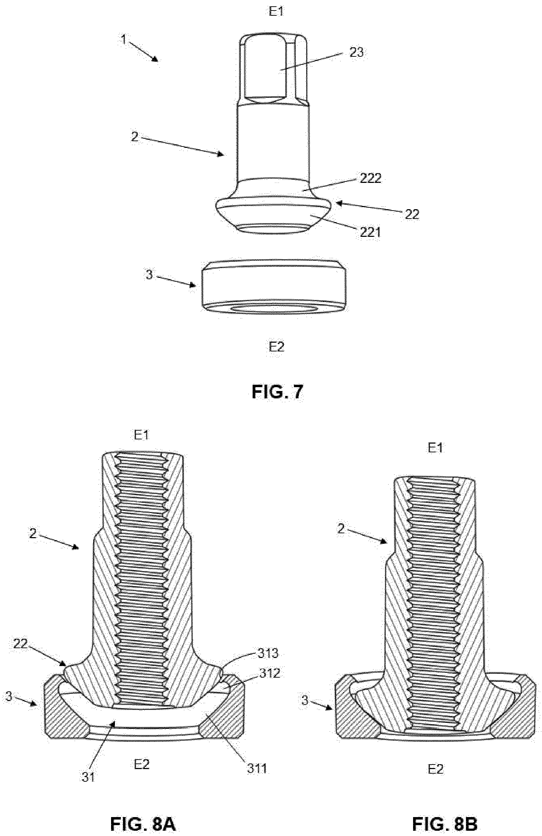

Fig. 7 and 8A-8B show an inner articulated nipple (1) according to the present invention. This inner articulated nipple (1) has essentially the same characteristics disclosed with respect to the outer articulated nipple (1) disclosed in the above paragraphs, and therefore a complete description of repeated features is omitted. The main difference between the outer nipple (1) disclosed above and the inner nipple (1) in these figures is the position of the protrusion (22). In the inner nipple (1), the protrusion (22) is positioned next to the second end (E2) of the body (2).

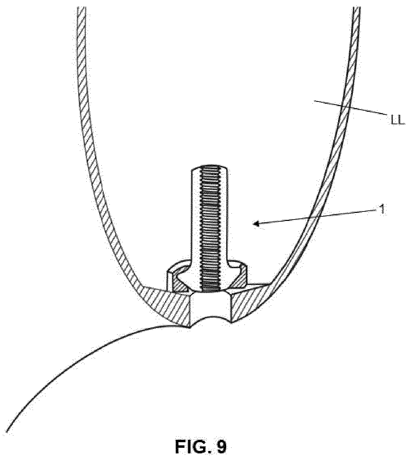

With the protrusion (22) in this position, as shown in Fig. 9, when the inner articulated nipple (1) is installed no length of the body (2) protrudes through the orifice in the rim (LL). The body (2), on the other hand, is still rotatable with respect to the washer (3), which firmly rests against the inner surface of the rim (LL).

## Claims

1. Articulated nipple (1) for the fixation of a bicycle spoke (R) comprising an elongated body (2) and a washer (3), wherein the body (2) comprises a threaded longitudinal orifice (21) configured for the threaded connection o fan end of a bicycle spoke (R) and the washer (3) is configured to abut against an inner surface of the rim (LL), **characterized in that:**
the body (2) comprises a radial protrusion (22) radially protruding therefrom; and
the washer (3) comprises a radially inner face (31) that is recessed in a radially outward direction for conforming a radial cavity with a size and shape adapted to receive the protrusion (22) of the body (2),
where said protrusion (22) is housed inside said radial cavity to conform an articulated connection between the washer (3) and the body (2), said articulated connection being configured to allow for the body (2) to rotate an angle (α) with respect to the washer (3) around an axis that is perpendicular to the longitudinal axis (EL_{A}) of the washer (3).

2. Articulated nipple (1) according to claim 1, wherein:
the radially inner face (31) of the washer (3) comprises a first length (311) having a diameter that increases towards a first end (E1) of the nipple (1) followed by a second length (312) having a diameter that decreases towards said first end (E1),
and said protrusion (22) comprises a first face (221) oriented towards a second end (E2) of the nipple (1) opposite the first end (E1), said first face (221) having a curved shape that is complementary with the curved shape of the first length (311) of the radially inner face (31) of the washer,
the protrusion (22) being housed in the radial cavity formed by the radially inner face (31) of the washer (3) between the first length (31) and the second length (32) such that, in use, the first face (221) of the protrusion (22) contacts in a rotatable sliding manner the first length (311) of the radially inner face (31) of the washer (3) in a ball-joint like manner to conform the articulated joint.

3. Articulated nipple (1) according to claim 2, where the first length (311) of the radially inner face (31) of the washer (3) and the first face (221) of the protrusion (22) that, in use, contacts it, have a spherical portion shape.

4. Articulated nipple (1) according to any of claims 2-3, where the diameter of the radially inner ends respectively of the first (311) and second (312) lengths of the radially inner face (31) of the washer (3) is smaller than the maximum diameter of the protrusion (22) of the body (2), such that said protrusion (22) is trapped inside the radial cavity conformed by the radially inner face (31) of the washer (3).

5. Articulated nipple (1) according to claim 4, where the radially inner face (31) of the washer (3) further comprises, after the second length (312), a third length (313) having a diameter that increases towards the first end (E1), the assembly formed by the second length (312) and the third length (313) conforming a flange configured to open radially in an elastic manner during an operation to introduce the protrusion (22) of the body (2) in the radial cavity of the washer (3) when assembling the nipple (1) when the first face (221) of the protrusion (22) pushes towards the second end (E2) against the third length (313) of the washer (3).

6. Articulated nipple (1) according to claim 5, where the third length (313) is shaped as a conical ramp opening towards the first end (E1).

7. Articulated nipple (1) according to any of claims 5-6, where introduction of the protrusion (22) of the body (2) into the radial cavity formed by the radially inner face (31) of the washer (3) is carried out by applying pressure or by riveting.

8. Articulated nipple (1) according to any of the previous claims, where the angle (α) is up to 15°.

9. Articulated nipple (1) according to any of the previous claims, where the protrusion (22) is adjacent the second end (E2) of the body (2).

10. Articulated nipple (1) according to any of claims 1-9, where the protrusion (22) is placed at an intermediate portion of the body (2).

11. Articulated nipple (1) according to any of the previous claims, where the body (2) and the washer (3) are made of one or more of the following materials: aluminium, brass, steel, magnesium, titanium, bronze and synthetic fibres.

12. Method for producing an articulated nipple according to any of the previous claims, comprising a step of applying pressure or riveting to introduce the protrusion (22) of the body (2) in the radial cavity formed by the radially inner face (31) of the washer (3).

## Patentansprüche

1. Gelenknippel (1) zur Befestigung einer Fahrradspeiche (R), der einen länglichen Körper (2) und eine Passscheibe (3) umfasst, wobei der Körper (2) eine mit einem Gewinde versehene Längsöffnung (21) umfasst, die zum Gewindeanschluss eines Endes einer Fahrradspeiche (R) ausgebildet ist, und die Passscheibe (3) so ausgebildet ist, dass sie an einer Innenfläche der Felge (LL) anliegt, **dadurch gekennzeichnet, dass:**
der Körper (2) einen radialen Vorsprung (22) umfasst, der radial von ihm absteht; und
die Passscheibe (3) eine radial innere Fläche (31) umfasst, die in radial äußerer Richtung vertieft ist, um einen radialen Hohlraum zu bilden, dessen Größe und Form so ausgelegt sind, dass er den Vorsprung (22) des Körpers (2) aufnehmen kann,
wobei der Vorsprung (22) in dem radialen Hohlraum aufgenommen ist, um eine Gelenkverbindung zwischen der Passscheibe (3) und dem Körper (2) zu bilden, wobei die Gelenkverbindung so ausgelegt ist, dass sich der Körper (2) um einen Winkel (α) relativ zur Passscheibe (3) um eine Achse drehen kann, die senkrecht zur Längsachse (EL_{A}) der Passscheibe (3) steht.

2. Gelenknippel (1) nach Anspruch 1, wobei:
die radial innere Fläche (31) der Passscheibe (3) einen ersten Abschnitt (311) umfasst mit einem Durchmesser, der zu einem ersten Ende (E1) des Nippels (1) hinzunimmt, gefolgt von einem zweiten Abschnitt (312) mit einem Durchmesser, der zu dem ersten Ende (E1) hin abnimmt,
und der Vorsprung (22) eine erste Fläche (221) umfasst, die zu einem zweiten Ende (E2) des Nippels (1) hin ausgerichtet ist, das dem ersten Ende (E1) gegenüberliegt, wobei die erste Fläche (221) eine gekrümmte Form aufweist, die komplementär zur gekrümmten Form des ersten Abschnitts (311) der radial inneren Fläche (31) der Passscheibe ist,
wobei der Vorsprung (22) in dem radialen Hohlraum untergebracht ist, der durch die radial innere Fläche (31) der Passscheibe (3) zwischen dem ersten Abschnitt (31) und dem zweiten Abschnitt (32) gebildet wird, so dass bei Gebrauch die erste Fläche (221) des Vorsprungs (22) in einer drehbaren Gleitbewegung mit dem ersten Abschnitt (311) der radial inneren Fläche (31) der Passscheibe (3) in einer kugelgelenkartigen Weise in Kontakt kommt, um die Gelenkverbindung zu bilden.

3. Gelenknippel (1) nach Anspruch 2, wobei der erste Abschnitt (311) der radial inneren Fläche (31) der Passscheibe (3) und die erste Fläche (221) des Vorsprungs (22), die bei Gebrauch mit ihr in Kontakt kommt, eine kugelförmige Profilform aufweisen.

4. Gelenknippel (1) gemäß einem der Ansprüche 2 bis 3, wobei der Durchmesser der jeweils radial inneren Enden des ersten (311) und des zweiten (312) Abschnitts der radial inneren Fläche (31) der Passscheibe (3) kleiner ist als der maximale Durchmesser des Vorsprungs (22) des Körpers (2), so dass der Vorsprung (22) innerhalb des radialen Hohlraums, der durch die radial innere Fläche (31) der Passscheibe (3) gebildet wird, eingeklemmt ist.

5. Gelenknippel (1) nach Anspruch 4, wobei die radial innere Fläche (31) der Passscheibe (3) nach dem zweiten Abschnitt (312) ferner einen dritten Abschnitt (313) mit einem Durchmesser umfasst, der zum ersten Ende (E1) hin zunimmt, wobei die aus dem zweiten Abschnitt (312) und dem dritten Abschnitt (313) gebildete Anordnung einen Flansch bildet, der so ausgebildet ist, dass er sich während eines Vorgangs zum Einführen des Vorsprungs (22) des Körpers (2) in den radialen Hohlraum der Passscheibe (3) beim Zusammenbau des Nippels (1) elastisch radial öffnet, wenn die erste Fläche (221) des Vorsprungs (22) in Richtung des zweiten Endes (E2) gegen den dritten Abschnitt (313) der Passscheibe (3) drückt.

6. Gelenknippel (1) nach Anspruch 5, wobei der dritte Abschnitt (313) als sich zum ersten Ende (E1) hin öffnende konische Rampe ausgebildet ist.

7. Gelenknippel (1) gemäß einem der Ansprüche 5 bis 6, wobei das Einführen des Vorsprungs (22) des Körpers (2) in den durch die radial innere Fläche (31) der Passscheibe (3) gebildeten radialen Hohlraum durch Druckausübung oder durch Nieten erfolgt.

8. Gelenknippel (1) gemäß einem der vorstehenden Ansprüche, wobei der Winkel (α) bis zu 15° beträgt.

9. Gelenknippel (1) gemäß einem der vorstehenden Ansprüche, wobei sich der Vorsprung (22) neben dem zweiten Ende (E2) des Körpers (2) befindet.

10. Gelenknippel (1) gemäß einem der Ansprüche 1 bis 9, wobei der Vorsprung (22) an einem mittleren Abschnitt des Körpers (2) angeordnet ist.

11. Gelenknippel (1) gemäß einem der vorstehenden Ansprüche, wobei der Körper (2) und die Passscheibe (3) aus einem oder mehreren der folgenden Materialien bestehen: Aluminium, Messing, Stahl, Magnesium, Titan, Bronze und Kunstfasern.

12. Verfahren zur Herstellung eines Gelenknippels gemäß einem der vorstehenden Ansprüche, das einen Schritt des Aufbringens von Druck oder des Nietens umfasst, um den Vorsprung (22) des Körpers (2) in den radialen Hohlraum einzuführen, der durch die radial innere Fläche (31) der Passscheibe (3) gebildet wird.

## Revendications

1. Écrou de rayon articulé (1) pour fixer un rayon de bicyclette (R) comprenant un corps allongé (2) et une rondelle (3), où le corps (2) comprend un orifice longitudinal taraudé (21) configuré pour la connexion filetée ou une extrémité d'un rayon de bicyclette (R) et la rondelle (3) est configurée pour venir en appui contre la surface intérieure de la jante (LL), **caractérisé en ce que** :
le corps (2) comprend une saillie radiale (22) s'étendant radialement vers l'extérieur; et
la rondelle (3) comprend une face radialement intérieure (31) qui est en retrait dans une direction radialement tournée vers l'extérieur pour composer une cavité radiale d'une taille et avec une forme adaptées pour accueillir la saillie (22) du corps (2),
où ladite saillie (22) est logée à l'intérieur de ladite cavité radiale pour composer une liaison articulée entre la rondelle (3) et le corps (2), ladite liaison articulée étant configurée pour permettre au corps (2) de tourner selon un angle (a) par rapport à la rondelle (3), autour d'un axe qui est perpendiculaire à l'axe longitudinal (ELA) de la rondelle (3).

2. Écrou de rayon articulé (1) conformément à la revendication 1, où : la face radialement intérieure (31) de la rondelle (3) comprend une première portion (311) ayant un diamètre qui augmente en direction d'une première extrémité (E1) de l'écrou de rayon (1) suivie d'une seconde portion (312) d'un diamètre qui se réduit en direction de ladite première extrémité (E1),
et ladite saillie (22) comprend une première face (221) orientée vers une seconde extrémité (E2) de l'écrou de rayon (1) opposée à la première extrémité (E1), ladite première face (221) ayant une forme courbe qui est complémentaire à la forme courbe de la première portion (311) de la face radialement intérieure (31) de la rondelle, la saillie (22) étant logée dans la cavité radiale formée par la face radialement intérieure (31) de la rondelle (3) entre la première portion (31) et la seconde portion (32) de telle sorte que, pendant l'utilisation, la première face (221) de la saillie (22) entre en contact de manière coulissante en rotation avec la première portion (311) de la face radialement intérieure (31) de la rondelle (3) à la manière d'une rotule pour composer le joint articulé.

3. Écrou de rayon articulé (1) conformément à la revendication 2, où la première portion (311) de la face radialement intérieure (31) de la rondelle (3) et la première face (221) de la saillie (22) qui, pendant l'utilisation, entre en contact avec elle, a une forme de portion sphérique.

4. Écrou de rayon articulé (1) conformément à n'importe laquelle des revendications 2-3, où le diamètre des extrémités radialement intérieures par rapport aux première (311) et seconde (312) portions de la face radialement intérieure (31) de la rondelle (3) est plus petit que le diamètre maximum de la saillie (22) du corps (2), de telle sorte que ladite saillie (22) est piégée à l'intérieur de la cavité radiale composée par la face radialement intérieure (31) de la rondelle (3).

5. Écrou de rayon articulé (1) conformément à la revendication 4, où la face radialement intérieure (31) de la rondelle (3) comprend par ailleurs, après la deuxième portion (312) une troisième portion (313) ayant un diamètre qui augmente en direction de la première extrémité (E1), l'ensemble formé par la deuxième portion (312) et la troisième portion (313) formant une collerette conçue pour s'ouvrir radialement de manière élastique pendant une opération pour introduire la saillie (22) du corps (2) dans la cavité radiale de la rondelle (3) lors de l'assemblage de l'écrou de rayon (1), lorsque la première face (221) de la saillie (22) vers la deuxième extrémité (E2) contre la troisième portion (313) de la rondelle (3).

6. Écrou de rayon articulé (1) conformément à la revendication 5, où la troisième longueur (313) est formée comme une rampe conique s'ouvrant vers la première extrémité (E1).

7. Écrou de rayon articulé (1) conformément à n'importe laquelle des revendications 5-6, où l'introduction de la saillie (22) du corps (2) dans la cavité radiale formée par la face radialement intérieure (31) de la rondelle (3) est extraite vers l'extérieur en appliquant de la pression ou par un rivetage.

8. Écrou de rayon articulé (1) conformément à l'une des revendications précédentes quelconque, où l'angle (a) est de 15° maximum.

9. Écrou de rayon articulé (1) conformément à l'une des revendications précédentes quelconque, où la saillie (22) est adjacente à la seconde extrémité (E2) du corps (2).

10. Écrou de rayon articulé (1) conformément à n'importe laquelle des revendications 1 - 9 où la saillie (22) est placée sur une partie intermédiaire du corps (2).

11. Écrou de rayon articulé (1) conformément à l'une des revendications précédentes quelconque, où le corps (2) et la rondelle (3) sont fabriqués en un ou plusieurs des matériaux suivants : aluminium, laiton, acier, magnésium, titane, bronze et fibres synthétiques.

12. Méthode de fabrication d'un écrou de rayon articulé conformément à l'une quelconque des revendications précédentes, comprenant une étape d'application de pression ou de rivetage pour introduire la saillie (22) du corps (2) dans la cavité radiale formée par la face radialement intérieure (31) de la rondelle (3).
